## Europäisches Patentamt
## European Patent Office
## Office européen des brevets

(19)

(11) Veröffentlichungsnummer: **0 227 710**
**B1**

(12) **EUROPÄISCHE PATENTSCHRIFT**

(45) Veröffentlichungstag der Patentschrift:
**08.11.89**

(51) Int. Cl.⁴: **G 01 V 1/133**

(21) Anmeldenummer: **86903245.8**

(22) Anmeldetag: **12.06.86**

(86) Internationale Anmeldenummer:
**PCT/DE 86/00246**

(87) Internationale Veröffentlichungsnummer:
**WO 87/00296 (15.01.87** Gazette 87/1)

(54) **VORRICHTUNG ZUR HYDRODYNAMISCHEN SCHALLIMPULSERZEUGUNG IN EINEM FLÜSSIGKEITSVOLUMEN.**

(30) Priorität: **29.06.85 DE 3523324**

(43) Veröffentlichungstag der Anmeldung:
**08.07.87 Patentblatt 87/28**

(45) Bekanntmachung des Hinweises auf die Patenterteilung:
**08.11.89 Patentblatt 89/45**

(84) Benannte Vertragsstaaten:
**BE DE FR GB IT NL SE**

(56) Entgegenhaltungen:
**DE-A- 2 921 362**
**DE-C- 620 483**
**FR-A- 2 359 350**
**US-A- 3 642 089**
**US-A- 3 679 021**
**US-A- 3 684 050**
**US-A- 3 949 831**
**US-A- 4 047 592**

(73) Patentinhaber: **Max-Planck-Gesellschaft zur Förderung der Wissenschaften e.V., Bunsenstrasse 10, D-3400 Göttingen (DE)**

(72) Erfinder: **MEIER, Gerd, E., A., Am Menzelberg 6, D-3400 Göttingen (DE)**
Erfinder: **LAAKE, Andreas, Am Weisen Steine 13, D-3400 Göttingen (DE)**

(74) Vertreter: **Patentanwälte Viering & Jentschura, Steinsdorfstrasse 6, D-8000 München 22 (DE)**

ACTORUM AG

**Beschreibung**

Die Erfindung betrifft eine Vorrichtung zur hydrodynamischen Schallimpulserzeugung in einem Flüssigkeitsvolumen, insbesondere Schallimpulserzeuger für Messungen der marinen Geophysik, mit einem in das Flüssigkeitsvolumen einbringbaren einendig offenen Rohr zur Umgrenzung einer Flüssigkeitssäule in dem Flüssigkeitsvolumen, die an dem dem offenen Rohrende abgewandten Ende axial von einem Kolben begrenzt wird, der in dem Rohr abgedichtet verschiebbar ist und mittels eines Antriebs in Richtung zu dem offenen Rohrende bewegbar ist.

Wenngleich die Erfindung bevorzugt zur Schallimpulserzeugung im Meer für Messungen auf dem Gebiet der marinen Geophysik verwendet wird, ist die Erfindung auch für andere Zwecke geeignet, bei denen hydrodynamische Schallimpulse ausnutzbar sind, insbesondere für die Wassertiefenmessung im Echolotverfahren oder auch für therapeutische und medizinische Unterwasserbehandlungen.

Flüssigkeitsschallimpulse werden derzeit häufig durch impulsartige Zufuhr der Schallenergie erzeugt. Dies geschieht zumeist über Funkenentladung oder durch Detonation geeigneter Sprengstoffkapseln innerhalb der Flüssigkeit. Die piezoelektrischen und magnetostriktiven Schallerzeuger hingegen können im allgemeinen wegen ihrer begrenzten Amplituden keine starken Schallimpulse liefern. Weitere Möglichkeiten bestehen in der aerodynamischen Schallerzeugung, bei welcher ein Druckluftvolumen in die umgebende Flüssigkeit ausgebracht wird, wodurch der Druckanstieg in der Flüssigkeit infolge der Expansion des Druckluftvolumens und der dadurch herbeigeführten Verdrängung der Flüssigkeit eine Schallwelle erzeugt, und in der Schallerzeugung durch Zusammenfallen von Kavitationsblasen.

Nach den bekannten Verfahren entsteht jedoch ein stark wellenförmiges Drucksignal, welches zu störenden Mehrfachimpulsen führt. Überdies ist zumeist der Frequenzbereich des Schallsignals auf wenige Hertz beschränkt und eignet sich daher nur wenig zu Untersuchungen von frequenzabhängigen Größen wie zum Beispiel der Dämpfung der Schallwellen im Meeresboden. Ferner ist auch der Energiebedarf zur Erzeugung eines gewünschten Schalldruckes hoch.

Bei einer bekannten Vorrichtung zur hydrodynamischen Schallimpulserzeugung für Messungen der marinen Geophysik ist ein einendig offenes Rohr vorgesehen, das am offenen Rohrende als Schalltrichter ausgebildet ist, welcher sich von einem Rohrabschnitt konstanten Innendurchmessers aus zu dem offenen Rohrende allmählich erweitert (FR-A-2 359 350). Bei dieser Vorrichtung erfolgt die Schallimpulserzeugung durch plötzliches Freisetzen von Dampf hohen Druckes, wozu in dem Rohr ein Ventil ausgebildet ist, welches mit einem Kolben mit Rückstellfeder verbunden ist, der unter Druckbeaufschlagung bis in eine von einem Anschlag begrenzte Stellung unter Öffnen des Ventils vorschiebbar ist.

Ferner ist auch eine Vorrichtung der eingangs erwähnten Art bekannt (US-A-3 679 021), bei der der Kolben, nachdem er mit Hilfe eines Hydraulikantriebes zu dem offenen Rohrende verfahren worden ist, unter dem Druck der Flüssigkeit zum geschlossenen Rohrende getrieben werden und dort unter Erzeugung eines akustischen Impulses zurückschlagen soll, wonach er festgehalten wird, um sein Nachschwingen zu vermeiden.

Durch die Erfindung wird die Aufgabe gelöst, eine Vorrichtung der eingangs erwähnten Art so auszubilden, daß zeitlich scharf begrenzte, starke Schallimpulse in der Flüssigkeit bei hoher Bandbreite des Schallfrequenzspektrums mit vergleichsweise geringem Energieaufwand erzeugt werden können.

Dies wird erfindungsgemäß dadurch erreicht, daß das aus einem dehnsteifen Material hoher Massenträgheit bestehende Rohr am offenen Rohrende als Schalltrichter ausgebildet ist, der sich von einem Rohrabschnitt konstanten Innendurchmessers aus zu dem offenen Rohrende allmählich erweitert, und daß der Antrieb ein fester Schlagkörper ist, der aus einer Ausgangsstellung heraus, in welcher er hinter dem Kolben im Abstand von diesem angeordnet ist, bis zum Aufprall auf den Kolben beschleunigbar ist, der als Übertragungskolben ausgebildet ist, der in dem Rohrabschnitt konstanten Innendurchmessers unter dem Aufprall des Schlagkörpers gegen die Kraft einer an dem Kolben angreifenden Rückstellfeder bis in eine von einem Anschlag begrenzte Stellung vorschiebbar ist, derart, daß das von dem Kolben begrenzte Ende der Flüssigkeitssäule plötzlich zu dem offenen Rohrende hin beschleunigt und dadurch komprimiert wird.

Mit der erfindungsgemäßen Vorrichtung werden die Schallimpulse durch Ausnutzung des an sich bekannten Wasserschlages erzeugt, der durch eine sehr rasche Änderung der Strömung in einem Rohr innerhalb einer Zeitspanne entsteht, die nach Joukowski kleiner als die zweifache Rohrlänge geteilt durch die Schallgeschwindigkeit in der Flüssigkeit betragen muß. Unter dieser Bedingung wird die Flüssigkeit im Gebiet der raschen Änderung der Strömung kompressibel, wodurch eine Schallwelle erregt wird, die z.B. in Röhren und anderen Leitungsteilen eines Rohrleitungsnetzes ein Schlaggeräusch verursacht, welches in solchen Rohrleitungsanlagen zumindest störend wirkt. Demgegenüber wird die Erscheinung des Wasserschlages mit der erfindungsgemäßen Vorrichtung zur hydrodynamischen Schallimpulserzeugung in einem Flüssigkeitsvolumen ausgenutzt, indem der mit dem Prinzip des Wasserschlages erzeugte Schalldruckimpuls durch das offene Rohrende in das Flüssigkeitsvolumen abgestrahlt wird.

Gleichzeitig erfolgt eine Reflexion an diesem Rohrende und da es sich um ein akustisch offenes Rohrende handelt, wird dort die durch den Wasserschlag entstandene Druckwelle mit einem Phasensprung von $180\,^{\circ}C$, d.i. als Verdünnungswelle in die Flüssigkeitssäule reflektiert. Da hierdurch der Druck nach Eintreffen der am geschlossenen Rohrende reflektierten Verdünnungswelle an dem offenen Rohrende entsprechend deutlich absinkt, fällt die hintere Flanke des ausgesendeten Schallimpulses entsprechend steil ab, wodurch der abgestrahlte Schallimpuls zeitlich scharf begrenzt wird. Die Dauer des abgestrahlten Schallimpulses wird demnach von der Länge der Flüssigkeitssäule bestimmt. Wegen der Rechteck- ähnlichkeit des erhaltenen Drucksignales enthält das Frequenzspektrum außer einer Hauptfrequenz auch noch deren ungeradzahligen Vielfachen sowie Frequenzen aufgrund von Longitudinalwellen im Rohr. Insgesamt ergibt sich daher eine verhältnismäßig hohe Bandbreite des abgestrahlten Schallfrequenzspektrums. Gleichzeitig ist der Energieaufwand für die Erzeugung des Schallimpulses verhältnismäßig gering, da durch die Ausnutzung des Wasserschlages vielfach größere Drücke erzeugt werden als der Anregungsdruck beträgt.

Mit der erfindungsgemäßen Vorrichtung wird außerdem ein Nachschwingen der Flüssigkeit in der Flüssigkeitssäule nach der Abstrahlung des Schallimpulses unterdrückt, so daß der abgestrahlte Schallimpuls ein Einzelimpuls ist, ohne daß störende Mehrfachimpulse auftreten, weil das dem offenen Rohrende abgewandte Rohrende von dem Übertragungskolben schallhart geschlossen gehalten wird, wodurch die anfangs am offenen Rohrende durch Reflexion entstehende Verdünnungswelle ihrerseits an dem akustisch geschlossenen Rohrende ohne Phasensprung wieder als Verdünnungswelle reflektiert wird, die in der Flüssigkeitssäule Kavitation erzeugt, durch welche die anschließend infolge der Reflexion dieser Verdünnungswelle am offenen Rohrende reflektierte Druckwelle gedämpft wird, da durch die Kavitation die Schallgeschwindigkeit herabgesetzt wird.

Durch die Ausbildung des Rohres aus einem dehnsteifen Material werden Druckänderungen durch Querschnittsveränderungen des Rohres und daher in der Rohrwand übertragene Transversalwellen für das Frequenzspektrum und die Dauer des abgestrahlten Schallimpulses vernachlässigbar. Da außerdem das Rohr aus einem Material hoher Massenträgheit besteht, wird verhindert, daß durch den bei dem Aufprall des Schlagkörpers auf den Übertragungskolben entstehenden Rückstoßimpuls eine wesentliche, den Druck des Wasserschlages erheblich abbauende Axialbewegung des Rohres induziert wird. Vorzugsweise beträgt die Massenträgheit des Rohres wenigstens das Zehn- bis Zwanzigfache der Massenträgheit der Flüssigkeitssäule.

Überdies wird durch die Ausbildung des offenen Rohrendes als Schalltrichter ein wesentlicher Impedanzsprung bei der Abstrahlung des Schallimpulses verhindert und es wird eine gute Ankoppelung der Schallwellen im Rohr an die ebenen Wellen im Fernfeld der Rohröffnung durch eine allmähliche Erweiterung des Schalltrichters erreicht, durch welche die Rohrwellen von dem engsten Rohrquerschnitt ohne Sprung auf eine Fläche mit dem Durchmesser von etwa der Wellenlänge der Hauptfrequenz des abgestrahlten Schallimpulses auseinandergezogen werden. In diesem Fall wird die Reflexion am offenen Trichterende minimal, wohingegen die Dämpfung der Wellen im Rohr in Folge der Abstrahlung des Schallimpulses maximal wird. Bevorzugt ist der Schalltrichter als hyperbolischer Trichter ausgebildet.

Es ist ersichtlich, daß es für die erfindungsgemäße hydrodynamische Schallimpulserzeugung nicht auf die Außengestalt des Rohres ankommt. Unter der hier verwendeten Bezeichnung «Rohr» ist daher auch eine Bohrung in einem sonstigen festen Materialkörper zu verstehen.

Die Länge der Flüssigkeitssäule ist größer als der Durchmesser des dem offenen Rohrende abgewandten Endes der Flüssigkeitssäule, vorzugsweise größer als das doppelte dieses Durchmessers. Wenn sehr kurze Impulse erzeugt werden sollen, kann gegebenenfalls jedoch die Länge der Flüssigkeitssäule auch klein gegen den Durchmesser sein.

Die Masse des Schlagkörpers ist größer als die Masse der Flüssigkeitssäule und entspricht typisch dem Zehn- bis Zwanzigfachen der Masse der Flüssigkeitssäule.

Bei der erfindungsgemäßen Vorrichtung können entsprechende Einrichtungen zur zyklischen Wiederholung der Erzeugung des Schalldruckimpulses vorgesehen sein.

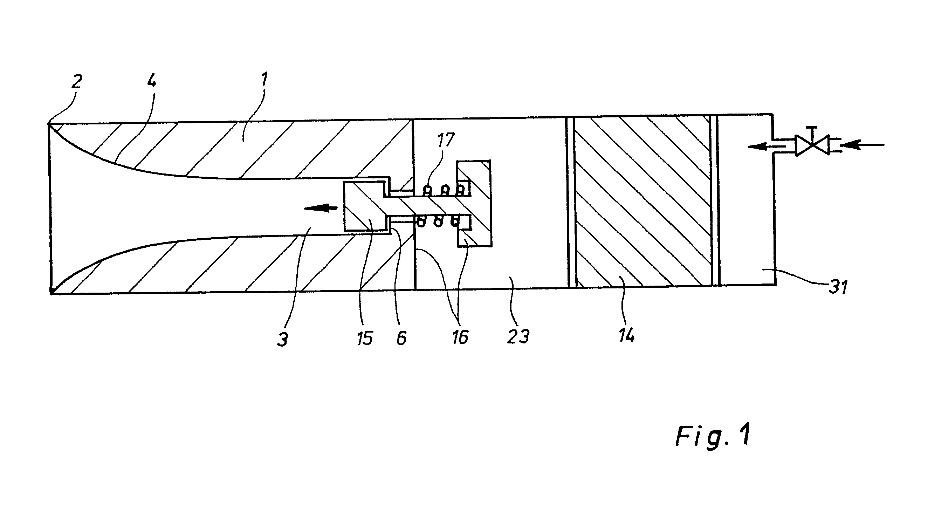

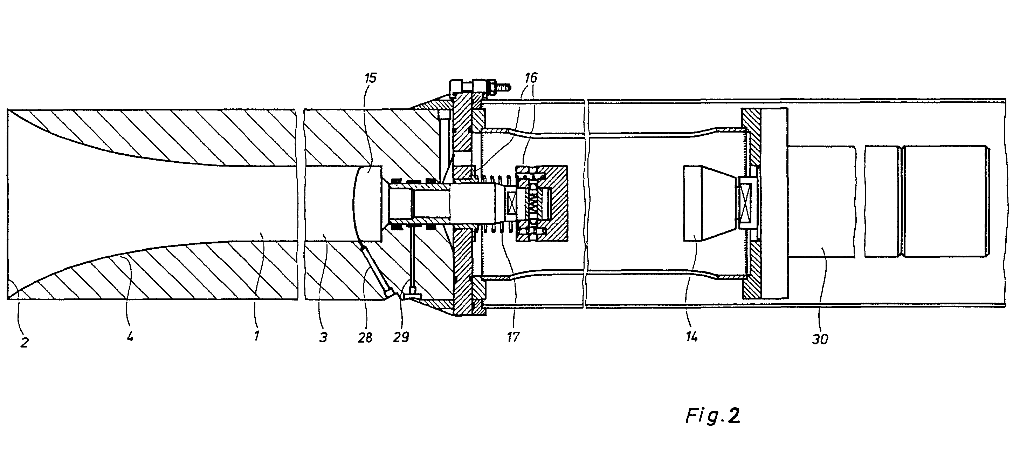

Die Erfindung wird anhand von Ausführungsformen erläutert, die aus der Zeichnung ersichtlich sind. In der Zeichnung zeigen die Figur 1 den prinzipiellen Aufbau einer Ausführungsform des erfindungsgemäßen Schallimpulserzeugers, und Figur 2 eine konstruktive Ausführungsform des Schallimpulserzeugers aus Figur 1 im Längsschnitt.

Die aus der Zeichnung wenigstens schematisch ersichtlichen Ausführungsformen erfindungsgemäßer hydrodynamischer Schallimpulserzeuger weisen jeweils ein Rohr 1 auf, welches an dem einen Rohrende 2 offen ist, so daß von dem Rohr 1 eine längenbegrenzte Flüssigkeitssäule begrenzt wird, wenn das Rohr 1 in ein Flüssigkeitsvolumen eingetaucht wird. Zur Flüssigkeitsschallimpulserzeugung wird die Flüssigkeitssäule an ihrem dem offenen Rohrende 2 abgewandten Ende schlagartig mit einer axial zum Rohr ausgerichteten Druckkraft beaufschlagt, so daß in diesem Ende der Flüssigkeitssäule ein Schalldruckimpuls erzeugt wird, welcher sich in der Flüssigkeitssäule zu dem offenen Rohrende 2 hin fortpflanzt und dort als Schallimpuls in das Flüssigkeitsvolumen abgestrahlt wird. Zur Erzeugung der axialen Druckkraft wird die Flüssigkeitssäule von einer Hilfsmasse in Form eines festen Schlagkörpers beschleunigt, die man auf das dem offenen Rohrende 2 abgewandte Ende der Flüssigkeitssäule in der zu dem offenen Rohrende 2 hinführenden Axialrichtung abrupt auftreffen läßt. Das Rohr 1 besteht aus einem möglichst dehnsteifen Material, damit es als starrer Körper betrachtet werden kann und Querschnittsveränderungen des Rohres aufgrund der Druckänderung infolge des Wasserschlages, und somit die Ausbildung von Transversalwellen in der Rohrwand vernachlässigt werden können. Das Rohr 1 hat außerdem eine möglichst hohe Massenträgheit, damit der bei der plötzlichen Erzeugung des Schalldruckimpulses auf das Rohr 1 einwirkende Stoßimpuls nicht zu einer wesentlichen Translationsbewegung des Rohres 1 führt, durch welche andernfalls der erzeugte Schalldruckimpuls erheblich abgebaut würde. Außerdem erweitert sich der Innenraum des Rohres 1 zu dem offenen Rohrende 2 hin nach einer hyperbolischen Funktion, so daß das Rohr 1 am offenen Rohrende 2 einen Schalltrichter 4 bildet, um eine möglichst gute Ankopplung der ebenen Wellen im Rohr an die ebenen Wellen im Fernfeld der Rohröffnung zu erreichen.

Bei der in Fig. 1 gezeigten Ausführungsform ist an dem dem offenen Rohrende 2 abgewandten Rohrende 3 ein Übertragungskolben 15 angeordnet, der in dem Rohrende 3 abgedichtet verschiebbar ist und von einer Rückstellfeder 17 gegen den mit dem Übertragungskolben 15 zusammenwirkenden Anschlag 6 am Rohrende 3 gedrückt wird. In der dem offenen Rohrende 2 abgewandten Richtung hinter dem Übertragungskolben 15 ist ein Gasraum 23 ausgebildet, in welchen der Übertragungskolben 15 mit einem am Ende seiner Kolbenstange sitzenden Amboßteil hineinragt, der mit der benachbarten Stirnseite des Rohres 1 als Anschlag 16 zur Begrenzung des Kolbenweges zusammenwirkt. In dem Gasraum 23 ist im Abstand hinter dem Amboßteil des Übertragungskolbens 15 der feste Schlagkörper 14 angeordnet, dessen dem Übertragungskolben 15 abgewendete Seite einen unter Überdruck setzbaren Druckraum 31 begrenzt. Wenn dieser Druckraum 31 mit Druck beaufschlagt wird, wird daher der Schlagkörper 14 in Richtung zu dem Übertragungskolben 15 hin beschleunigt, bis er auf dem Amboßteil des Übertragungskolbens 15 auftrifft. Dadurch schlägt der Übertragungskolben 15 auf das dem offenen Rohrende 2 abgewandte Ende der im Rohr aufgenommenen Flüssigkeitssäule, wodurch der Schalldruckimpuls erzeugt wird. Danach kann der Schlagkörper 14 mittels eines in Figur 1 nicht gezeigten Spannantriebes wieder in seine hintere Ausgangsstellung zurückgeführt werden, wohingegen der Übertragungskolben 15 von der Feder 17 wieder in seine Ausgangsstellung zurückgeschoben wird, in welcher er an dem Anschlag 6 anliegt.

Die in Figur 2 gezeigte konstruktive Ausführungsform hat den gleichen prinzipiellen Aufbau wie die in Figur 1 gezeigte Ausführungsform. Dies ist in Figur 2 durch die gleichlautenden Bezugszeichen angegeben. Der Schlagkörper 14 wird von dem Kolben eines doppeltwirkenden Druckmittelzylinders 30 angetrieben, dessen Anschlüsse in Figur 2 nicht dargestellt sind. Durch den Weg des Übertragungskolbens 15 wird im wesentlichen die Länge des erzeugten Schalldruckimpulses bestimmt. Daher kann der Kolbenweg einstellbar sein, um die Impulslänge des Schalldruckimpulses einstellen zu können.

Bei der Ausführungsform aus Figur 2 mündet vor dem Übertragungskolben 15 eine Absaugbohrung 28, damit vor dem Kolben Lufteinschlüsse abgesaugt werden können, die andernfalls die Entstehung des Wasserschlages verhindern würden. Außerdem ist eine Schmiermittelbohrung 29 gezeigt, um den Übertragungskolben 15 zu schmieren und dadurch eine möglichst reibungsarme und daher möglichst schnelle Kolbenbewegung zu ermöglichen.

## Patentansprüche

1. Vorrichtung zur hydrodynamischen Schallimpulserzeugung in einem Flüssigkeitsvolumen, insbesondere Schallimpulserzeuger für Messungen der marinen Geophysik, mit einem in das Flüssigkeitsvolumen einbringbaren einendig offenen Rohr (1) zur Umgrenzung einer Flüssigkeitssäule in dem Flüssigkeitsvolumen, die an dem dem offenen Rohrende (2) abgewandten Ende axial von einem Kolben (15) begrenzt wird, der in dem Rohr (1) abgedichtet verschiebbar ist und mittels eines Antriebs in Richtung zu dem offenen Rohrende (2) bewegbar ist, dadurch gekennzeichnet, daß das aus einem dehnsteifen Material hoher Massenträgheit bestehende Rohr (1) am offenen Rohrende (2) als Schalltrichter (4) ausgebildet ist, der sich von einem Rohrabschnitt konstanten Innendurchmessers aus zu dem offenen Rohrende (2) allmählich erweitert, und daß der Antrieb ein fester Schlagkörper (14) ist, der aus einer Ausgangsstellung heraus, in welcher er hinter dem Kolben (15) im Abstand von diesem angeordnet ist, bis zum Aufprall auf den Kolben (15) beschleunigbar ist, der als Übertragungskolben ausgebildet ist, der in dem Rohrabschnitt konstanten Innendurchmessers unter dem Aufprall des Schlagkörpers (14) gegen die Kraft einer an dem Kolben (15) angreifenden Rückstellfeder (17) bis in eine von einem Anschlag (16) begrenzte Stellung vorschiebbar ist, derart, daß das von dem Kolben (15) begrenzte Ende der Flüssigkeitssäule plötzlich zu dem offenen Rohrende (2) hin beschleunigt und dadurch komprimiert wird.

2. Vorrichtung nach Anspruch 1, dadurch gekennzeichnet, daß die Masse des Schlagkörpers (14) dem 10- bis 20fachen der Masse der Flüssigkeitssäule entspricht.

3. Vorrichtung nach Anspruch 1 oder 2, dadurch gekennzeichnet, daß der Schalltrichter (4) als hyperbolischer Trichter ausgebildet ist.

4. Vorrichtung nach einem der Ansprüche 1 bis 3, dadurch gekennzeichnet, daß der Weg des Kolbens (15) einstellbar ist.

5. Vorrichtung nach einem der Ansprüche 1 bis 4, dadurch gekennzeichnet, daß die Länge der Flüssigkeitssäule größer als das Doppelte des Durchmessers des Kolbens (15) ist.

6. Vorrichtung nach einem der Ansprüche 1 bis 5, dadurch gekennzeichnet, daß der Schlagkörper (14) seinerseits von einem doppelt wirkenden Druckmittelzylinder (30) angetrieben wird.

## Claims

1. Apparatus for hydrodynamic sound impulse generation in a liquid volume, especially sound impulse generator for marine geophysics measurements, with a pipe (1) open at one end, which can be put into the liquid volume, for defining in the liquid volume a liquid column, which is confined axially at the end opposite the open pipe-end (2) by a piston (15), which is shiftable in the pipe (1) in a tight manner and movable by means of a drive in the direction to the open pipe-end (2), characterized in that the pipe (1) made of low-elastical material of high mass moment of inertia is formed at the open pipe-end (2) as a sound bell (4), which gradually widens from a pipe section of constant inside diameter to the open pipe-end (2), and that the drive is a solid percussive body (14), which can be accelerated from a starting position, in which it is arranged behind the piston (15) in spaced relation thereto, until it impacts on the piston (15), which is formed as a transfer piston, which can be shifted in the pipe section of constant inside diameter under the impact of the percussive body (14) against the force of a return spring acting upon the piston (15) until a position confined by a stop (16), in such a way that the end of the liquid column confined by the piston (15) is accelerated abruptly to the open pipe-end (2) and thus is compressed.

2. Apparatus according to claim 1, characterized in that the mass of the percussive body (14) is ten to twenty times the mass of the liquid column.

3. Apparatus according to claim 1 or 2, characterized in that the sound bell (4) is formed as an hyperbolical funnel.

4. Apparatus according to one of the claims 1 to 3, characterized in that the travel of the piston (15) is adjustable.

5. Apparatus according to one of the claims 1 to 4, characterized in that the length of the liquid column is greater than twice the diameter of the piston (15).

6. Apparatus according to one of the claims 1 to 5, characterized in that the percussive body (14) is driven by a double acting pressure cylinder (30).

## Revendications

1. Dispositif pour produire, par voie hydrodynamique, des impulsions acoustiques dans un volume de liquide, notamment générateur d'impulsions acoustiques pour des mesures dans le domaine de la géophysique marine, comportant un tube (1) ouvert à une extrémité, susceptible d'être introduit dans le volume de liquide et servant à délimiter, dans ce volume de liquide, une colonne de liquide qui est limitée axialement, au niveau de l'extrémité située à l'opposé de l'extrémité ouverte (2) du tube, par un piston (15), qui est déplaçable d'une manière étanche dans le tube (1) et qui est susceptible d'être entraîné au moyen d'un dispositif d'entraînement en direction de l'extrémité ouverte (2) du tube, caractérisé par le fait que le tube (1), réalisé en un matériau résistant à la dilatation et possédant une inertie de masse élevée, est agencé, au niveau de son extrémité ouverte (2), sous la forme d'un pavillon (4), qui s'élargit progressivement depuis une section du tube possédant un diamètre intérieur constant en direction de l'extrémité ouverte (2) du tube, et que le dispositif d'entraînement est un corps solide de percussion (14), qui est susceptible d'être accéléré depuis une position initiale, dans laquelle il est situé à une certaine distance en arrière du piston (15), jusqu'à venir percuter le piston qui est réalisé sous la forme d'un piston de transfert, pouvant être déplacé à l'intérieur de la section de tube de diamètre intérieur constant, sous l'action du choc du corps de percussion (14) et à l'encontre de la force d'un ressort de rappel (17) accroché au piston (15), jusque dans une position limitée par une butée (16), la réalisation étant telle que l'extrémité, de la colonne de liquide limitée par le piston (15), est brusquement accélérée en direction de l'extrémité ouverte (2) du tube et est de ce fait comprimée.

2. Dispositif suivant la revendication 1, caractérisé par le fait que la masse du corps de percussion (14) correspond à une valeur comprise entre 10 et 20 fois la masse de la colonne de liquide.

3. Dispositif suivant la revendication 1 ou 2, caractérisé par le fait que le pavillon (4) est réalisé sous la forme d'un pavillon hyperbolique.

4. Dispositif selon l'une des revendications 1 à 3, caractérisé par le fait que la course du piston (15) est réglable.

5. Dispositif suivant l'une des revendications 1 à 4, caractérisé par le fait que la longueur de la colonne de liquide est supérieure au double du diamètre du piston (15).

6. Dispositif suivant l'une des revendications 1 à 5, caractérisé par le fait que le corps de percussion (14) est entraîné pour sa part par un vérin à double effet (30).

Fig. 1

*Fig. 2*

EP 0 227 710 B1